## Europäisches Patentamt
## European Patent Office
## Office européen des brevets

(19)

(11) Publication number: **0 111 375**
**B1**

(12) **EUROPEAN PATENT SPECIFICATION**

(45) Date of publication of patent specification: **01.10.86**

(51) Int. Cl.⁴: **A 23 F 5/20**

(21) Application number: **83201745.3**

(22) Date of filing: **09.12.83**

(54) A process for decaffeinating green coffee beans with active carbon.

(30) Priority: **10.12.82 NL 8204803**

(43) Date of publication of application:
**20.06.84 Bulletin 84/25**

(45) Publication of the grant of the patent:
**01.10.86 Bulletin 86/40**

(84) Designated Contracting States:
**AT BE CH DE FR GB IT LI LU**

(56) References cited:
**EP-A-0 040 712**
**FR-A-2 399 265**
**US-A-4 118 341**

**CHEMICAL ABSTRACTS, vol. 24, no. 8, April 20, 1930, page 1934, COLUMBUS, OHIO (US), F. SARTORIOUS et al.: "Use of active carbon for the adsorption of caffeine, particularly from coffee infusions"**

**C.L. MANTELL:"Carbon and Graphite Handbook", Interscience Publishers, 1968, New York (US), page 205, table 99; page 188, table 90**

(73) Proprietor: **Douwe Egberts Koninklijke Tabaksfabriek- Koffiebranderijen-Theehandel N.V.**
**Keulsekade 143**
**NL-3532 AA Utrecht (NL)**

(72) Inventor: **Mooiweer, Gerben Douwe**
**Martinusgaarde 26**
**NL-3436 RE Nieuwegein (NL)**

(74) Representative: **Urbanus, Henricus Maria, Ir. et al**
**c/o Vereenigde Octrooibureaux Nieuwe Parklaan 107**
**NL-2587 BP 's-Gravenhage (NL)**

(58) References cited:

**H. VON KIENLE et al.:"Aktivkohle und ihre industrielle Anwendung", Ferdinand Enke Verlag, 1980, Stuttgart (DE), pages 76-77**

Courier Press, Leamington Spa, England.

## Description

This invention relates to the decaffeination of green coffee beans by means of active carbon.

Processes hitherto used on a commercial scale for the decaffeination of green coffee beans have employed chlorinated hydrocarbons. In one of the methods, used, the green coffee beans are moistened, i.e., saturated with water by a steam treatment, whereafter the moistened beans are extracted with the organic solvents referred to Klapproth (British patent 314,059) suggested first making an aqueous extract of the green beans, and treating this aqueous extract, rather than the beams themselves, with chlorinated hydrocarbons.

The extract contains, in addition to caffeine, the directly soluble solids, i.e., the components which are soluble in water without hydrolysis of the beans. The ratio of the caffeine content of the extract after complete extraction to the content of dissolved non-caffeine solids is then the same as in the dry beans. To give an idea: the caffeine content varies in different coffees from approximately 0.89 to approximately 3.0%, and the content of soluble solids from approximately 20 to approximately 30%. According to Klapproth, the resulting aqueous extract is treated with a water-immiscible organic solvent having a selective absorption capacity for caffeine. The decaffeinated extract is recycled, and the extraction-absorption cycle is repeated until the beans are sufficiently decaffeinated.

The beans are then discharged, and the extract is replenished with an amount of water corresponding to the amount of water absorbed by the beans discharged. The resulting solution is used for subjecting a second portion of beans to an extraction-absorption cycle. This is repeated for a third portion of beans, etc.

In U.S. patent 2,309,902 (General Foods), the above principle of extraction-selective extraction with recycling is elaborated to a continuous or semi-continuous process in which extraction is carried out under counter-current conditions.

That, in practice, chlorinated hydrocarbons are used in all cases, has to do with the fact that these liquids are little soluble in water and exhibit a high absorption selectivity relative to the system of caffeine-non-caffeine components. For health considerations, however, these substances are not harmless. At any rate, minute residues of these solvents for caffeine must be carefully removed from the decaffeinated beans. This is effected by prolonged steaming, which is not favourable to the organoleptic quality of the roasted beans produced from these beans.

For this reason, a great deal of research work has been done to find alternative methods which are fully acceptable from hygienic and organoleptic points of view. Thus experiments have been run with active carbon. In this connection it has been proposed to extract the beans with the water, and then to remove the caffeine from the extract with active carbon. It is difficult, in these active-carbon processes, to prevent a loss of solids. Such loss is little acceptable as being unfavourable both from a commercial point of view and from an organoleptic point of view. One reason is that active carbon is considerably less selective in adsorbing caffeine from an aqueous solution of caffeine and soluble non-caffeine solids than are chlorinated hydrocarbons. For this reason attempts have been made to apply certain expedients to enhance the selectivity of the active carbon. Thus, for example, according to European patent application 8,398 (Coffex), the active carbon is previously treated with sugar.

One disadvantage of this is that foreign constituents are introduced into the system, which may be objectionable under merchandise legislation.

According to European patent application 42294 (General Foods), the active carbon is subjected to such a pre-treatment that the active carbon particles are covered with a thin layer of a water-immiscible liquid having a selective adsorption capacity for caffeine. The degrees to which the active carbon thus treated can be loaded, however, are very low.

It is an object of the present invention to provide a process with which the desired result can be achieved without recourse to artifice which complicates the process and/or makes it more difficult to control, or may give rise to difficulties under merchandise legislation. It is a further object of the present invention to provide such a process that permits being converted in a continuous process that is easily controllable. In this connection we have gained a number of new and surprising insights, which each in themselves leads to processual improvement, and jointly to an optimization that permits of ready adaptation of circumstances in each specific case (cost price of beans, cost price of active carbon, content of caffeine and non-caffeine soluble solids in the beans, capital investment in equipment, etc.). These insights will be separately discussed hereinafter, whereafter the process that can be based on these insights will be described in more detail.

In the first place, we have found that, whereas the prior art continually refers to "active carbon" without any further specification, great improvements in the practice of the process can be achieved by a careful selection from the various commercially available carbons, applying certain criteria for the various characteristics.

A second new insight concerns the fact that, at least in some active carbons, selectivity increases with the concentration of the extract from the green beans. That this is suprising appears from the following. Per unit of active carbon, a specific number of "active places" is present. For example, if we have a relatively low concentration, in which 16 g of caffeine and 220 g of non-caffeine solubles are present per liter of extract, the "excess" of molecules of non-caffeine solids which compete for the active places of the active carbon relative to the caffeine molecules is 204 g/l. If, on the other hand, we have an extract that is twice as concentrated and contains, for example, 32 g/l caffeine and 440 g/l of non-caffeine solids, the same excess is 408 g/l, i.e. twice as high. The obvious expectation that the selectivity would become worse instead of remaining equal or becoming better, is expressed, for example, in European patent application 40712 (Nestlé), which states a preference for dilute solutions (see claim 7 and the examples).

Of advantage for a complete utilization of the above discovery of the applicants is the additional discovery that, at the conventional extraction temperatures, the concentration of the extract can be increased to a very high extent without the viscosity increasing to a value leading to practical difficulties in the extraction. Thus the viscosity of a 60% extract solution of green beans at 80°C is only 4.3 centipoises. This means that we have to do with a thin-liquid medium, which is also acceptable in the case of droplet extraction ("trickle flow").

A fourth new insight of the applicants is that in the commercially available carbons, there are large differences as regards the ratio between selectivity for caffeine and total adsorption capacity for caffeine, i.e., there are carbons which have a high adsorption capacity relative to a pure caffeine solution, but a low selectivity in the system of water—caffeine—non-caffeine extract solids. The same is true the other way round.

It is clear that, preferably, a carbon should be selected with a positive correlation between this adsorption capacity and this selectivity, i.e., as high a selectivity as possible and at the same time as high an adsorption capacity as possible. This can in part be effected emperically for which, as we have found, a search can be made among carbons characterized by the following standard properties.

Total active area: 1000—1200 m$^2$/g according to the N$_2$ BET method (BET method=Brunauer, Emmet and Teller; Journal Am. Chem. Soc. 60—309, 1938).

Iodine adsorption: higher than 1000 mg/gram

Methylene blue adsorption: less than 300 mg/gram

On the ground of the above-described insights, the present invention provides a process for decaffeinating green coffee beans by extraction with water, and treatment of the aqueous extract with active carbon, characterized in that the active carbon has a specific adsorption capacity for caffeine of at least 100 g/kg carbon, a specific selectivity of at least 0.200, and exhibiting a positive correlation between, on the one hand, the concentration of the bean extract, and on the other hand, the load ratio of caffeine/non-caffeine extract solids in the adsorbent when in equilibrium with that bean extract, said specific adsorption capacity being given by the number of grams of caffeine adsorbed by 1 kg of the active carbon when, at 80°C, it is in equilibrium with an aqueous caffeine solution having a concentration of 20 g caffeine per liter, and said specific selectivity of the active carbon being defined as the load ratio of caffeine/non-caffeine extract solids in the active carbon, determined with a bean equilibrium extract in equilibrium with the laden active carbon at a temperature of 80°C, said bean equilibrium extract being an extract which, as regards exchange of solids, is in equilibrium with beans to which just so much water has been added as corresponds to the maximum quantity absorbed by them with swelling.

The term "positive correlation" as used in this description and in the claims means that when the concentration of the bean extract increases, the load ratio of caffeine/non-caffeine extract solids when in equilibrium with that load extract also increases, and vice-versa.

Preferably, use is made of an active carbon having a specific adsorption capacity for caffeine higher than 300 g/kg carbon and a specific selectivity higher than 0.4. Particularly good results are obtained with a specific adsorption capacity higher than 450 g/kg carbon and a specific selectivity higher than 0.6.

The choice of active carbon can be applied to otherwise known, processes, such as those described in the above literature. More specifically, however, it can be applied to a novel process we have developed, in which counter-current extraction of the beans is combined with counter-current selective adsorption of caffeine from the resulting aqueous extract by active carbon, and recycling the extract thus produced to the counter-current extraction stage.

Preferably, under conditions of process equilibrium, this process is characterized by the following co-acting process stages:

(a) supplying the green coffee beans with a water content less than that of the total water adsorption capacity at the prevailing extraction temperature, and subjecting them at a temperature of 60—120°C, and under counter-current conditions, to moistening and extraction with the aqueous extract produced sub (c), in such a manner that the concentration of the final extract is higher than the bean equilibrium concentration, and the caffeine content is reduced to a pre-determined percentage p, calculated on the basis of the air-dry beans, with the beans being discharged in maximally swollen condition,

(b) treating the final extract produced sub (a) under counter-current conditions with the active carbon, said counter-current treatment being carried out in such a manner that the caffeine content is reduced to a percentage q, depending on the percentage p mentioned sub (a), and

(c) returning the decaffeinated extract produced sub (b) to the process stage mentioned sub (a), while adding an amount of water to this extract, equal to the amount adsorbed by the beans in process stage (a) and together with the beans ultimately removed from this process stage.

As regards the preferred embodiment relating to the sepcific adsorption capacity and the specific selectivity, reference is made to the range indicated above.

In a preferred embodiment of the invention, the beans are supplied to process stage (a) in the air-dry state.

Preferred temperatures range between 60° and 95°C. Highly suitable is a temperature around 80°C.

The bean equilibrium extract mostly has a concentration of about 21% by weight of total solid. All substances in the beans which are directly soluble (i.e. without hydrolysis) are then in the dissolved condition within the beans. When the beans are supplied in the dry state, they withdraw water from the extract. Accordingly, when the extract is recycled, its concentration will be increased. In principle, this can continue by selecting particular process conditions until the extract is in equilibrium with the extract solids in the dry state in the dry beans, i.e., that the extract is fully saturated as far as these extract substances are concerned.

The percentage p will in practice depend on the statutory regulations existing in the various countries. In most countries it will have to be less than 0.1%.

The dependence of q on p follows from the mass balances of the system. A control of the total system to remain within the ranges specified is effected in the manner conventional in continuous processes. Favourable process parameters can be theoretically calculated, at least by approximation, using known computing methods, with empirical adjustment in practice.

Preferably, process stage a is carried out in accordance with the "droplet-extraction" method ("tricle flow flow"). In it, the interspace between the particles is not filled with extract liquid. The liquid is sprayed onto a bead of beans and subsequently percolates through it. Normally, the collected liquid is immediate recycled for a major part. A suitable embodiment is that in which the beans are supplied on a conveyor belt divided into extraction sections, as will be illustrated hereinafter in and by an example and with reference to the accompanying drawings. One advantage of "droplet extraction" is that the amount of liquid which circulates in the system at a given amount is much less than in the case of "full flow", in which the interspaces between the beans are fully filled with extraction liquid. One consequence of this is that the residence time of the dry material, present in the extraction liquid, is considerably shorter, which is favourable to the organoleptical quality. All this will be discussed more fully hereinafter. Naturally, the use of an extraction battery is also possible. The treatment of the extract with active carbon for the adsorption of the caffeine is preferably carried out in an adsorption battery. The active carbon particles are much smaller than the beans. For this reason, "uniform" moistening of the particles in a bed is considerably more difficult. In this case, therefore, "full flow" may be advantageous. As stated before, this can be realised in a simple manner in a adsorption battery.

A great advantage of this continuous process, additional to the advantages correlated to the particular choice of the active carbon, is that the beans only have to be dried once. In other proposed processes using active carbon, the beans have to be dried a first time, then enabled to absorb extract, and subsequently dried for a second time. In addition, an additional step is required for concentrating the extract, (see, for example, European patent applications 40,712 and 8,398).

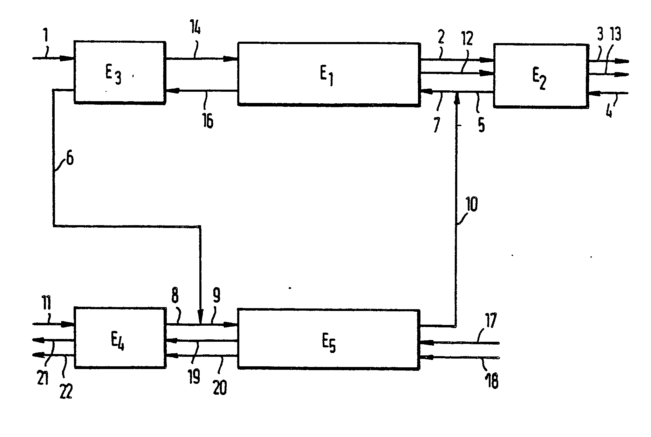

The above-described continuous process will be explained more fully hereinafter with reference to the accompanying drawing.

The drawing shows a flow sheet of the process according to the invention in case both the extraction of the beans and the adsorption of the caffeine from the aqueous solution produced during the extraction are effected countercurrently.

For the sake of clearness, the extraction section is shown divided into three sub-sections; this is also the case with the adsorption section. In practice, it is not necessary, of course, to use three separate extractors in the extraction section; no more is it necessary to use three separate battery systems, for example, in the adsorption section. In practice, therefore, $E_3$, $E_1$ and $E_2$ will represent departments of, for example, one and the same conveyor belt extractor, or one and the same extraction battery system. The same applies to $E_4$ and $E_5$.

At (1) the air-dry beans are supplied to $E_3$. Stream (14) represents the beans in fully moistened condition (i.e., the state of maximum swelling). The beans then arrive in $E_1$, in which the caffeine is extracted from the beans to the extent necessary. The beans leaving $E_1$ are separated from the extract, resulting in stream of beans (2). The appending extract is indicated by the stream (12). In $E_2$, a washing process takes place, during which the appendant extract is exchanged against water. This results in stream of beans (3) with appendant water (13). At (4), clean washing water is supplied. At (5), the washing water exits from $E_2$, enriched with the extract solids present in stream (12). Stream (5) is combined with stream (10) from the adsorption section. Together these form the stream (7), which enters $E_1$ and there extracts the caffeine in counter-current conditions. Exiting from $E_1$ is the stream of caffeine-rich extract (16), which is passed to $E_3$. In $E_3$, the dry beans absorb water from this stream of extract (16). The stream of extract (6) accordingly leaves $E_3$ with a higher concentration of solids than the stream of extract (16). The stream (6) is supplemented with the stream of washing water (8) to be described hereinafter to form stream of extract (9). This stream of extract (9) is passed to $E_5$ counter-currently to the active carbon. As the active carbon normally consists of fine particles (diameter of the particles, e.g., approximately 1 mm), supply in slurry condition is usually indicated. If moistening is difficult—which occurs frequently—particular measures have to be taken to accomplish this. For example, the carbon may first be subjected to partial vacuum before water is added. Also, boiling with water leads to the desired result. The dry carbon is indicated by stream (18), the water by (17).

As indicated, $E_5$ is preferably a battery system (as conventional, for example, in the extraction of roasted coffee for preparing a coffee extract, processed to produce instant coffee powder). The slurry exits from $E_5$ as a slurry consisting of laden active carbon, designated (20), and extract, designated (19). The stream of extract (19) has the same composition as (9). The slurry (19+20) enters the washing unit $E_4$ for washing the carbon. At the other end of $E_4$, the stream of clean washing water (11) enters. In practice this can be effected, for example, by first causing the slurry to enter a unit, as also used in the battery system $E_5$, and then causing the extract between the carbon particles to be displaced by clean washing water supplied from above. This displaced extract is designated by (8) and after being mixed with (6) is passed as stream (9) to $E_5$, as indicated. After the displacement of the extract (8) the slurry comprising laden carbon (22) and water (21) is discharged from $E_4$.

The exiting stream of beans (3) is dried and roasted in the conventional manner. The laden carbon (22) is dried and, if the carbon lends itself thereto, regenerated by burning the adsorbed substances. This is standard technology and results in regenerated active carbon which, possibly after replenishment, can be re-used in the process.

Example

$E_3$—$E_1$—$E_2$ form a conveyor belt system, e.g., a de Smet extractor as described in Australian patent 402,344. The total volume of beans present in the system at a given moment is 72 m³. The conveyor belt has the following dimensions: length 18 m, width 2 m and thickness of layer of beans 2 m.

The velocity of the conveyor belt is controlled so that the total residence time of the beans is 15 hours, which comes down to a production of 1.8 tons of decaffeinated (air-dry) coffee per hour.

$E_4$—$E_5$ is a battery system of eight columns, of which six form part of $E_5$, one is used for washing ($E_4$), and one is used for putting the slurry of fresh carbon in readiness. The dimensions of each column are: diameter 80 cm and height 4 m. Every four hours, the column put in readiness with 480 kg of fresh carbon slurry on one side is taken on-stream, and the column with slurry of laden carbon at the other side is taken off-stream and emptied.

The carbon used herein has the following characteristics:

| | |
|---|---|
| Total internal area according to B.E.T. | 1100 m²/g |
| Total pore volume | 0.95 cm³/g |
| micropores (r<0.5 nm) | 0.42 cm³/g |
| medium pores (r=0.5—50 nm) | 0.08 cm³/g |
| macropres (r>50 nm) | 0.45 cm³/g |
| $p_H$ | 6.0 |
| Iodine adsorption | 1150 mg/g carbon |
| Methylene blue adsorption | 269 mg/g carbon |

Coffee produced in this manner is practically fully decaffeinated.

**Claims**

1. A process for decaffeinating green coffee beans by extraction with water and treatment of the aqueous extract with active carbon, characterized in that the active carbon has a specific adsorption capacity for caffeine of at least 100 g per kg carbon, a specific selectivity of at least 0.200, and exhibits positive correlation between, on the one hand, the concentration of the bean extract, and, on the other hand, the load ratio of caffeine/non-caffeine extract solids in the adsorbent when in equilibrium with that bean extract, said specific adsorption capcity being given by the number of grams of caffeine adsorbed by 1 kg of the active carbon when, at 80°C, it is in equilibrium with an aqueous caffeine solution having a concentration of 20 g caffeine per liter, and said specific selectivity of the active carbon being defined as the load ratio of caffeine/non-caffeine extract solids in the active carbon, determined with a bean equilibrium extract in equilibrium with the laden active carbon at a temperature of 80°C, said bean equilibrium extract being an extract which, as regards exchange of solids, is in equilibrium with beans to which just so much water has been added as corresponds to the maximum quantity absorbed by them with swelling.

2. A process according to claim 1 for continuous mode, characterized, under conditions of process equilibrium, by the following co-acting process stages:

(a) supplying the green coffee beans with a water content less than that of the total water absorption capacity at the prevailing extraction temperature, and subjecting them at a temperature of 60—120°C, and under counter-current conditions, to moistening and extraction with the aqueous extract produced sub (c), in such a manner that the concentration of the final extract is higher than the bean equilibrium concentration, and the caffeine content is reduced to a pre-determined percentage p, calculated on the basis of the air-dry beans, with the beans being discharged in maximally swollen condition,

(b) treating the final extract produced sub (a) under counter-current conditions with the active carbon, said counter-current treatment being carried out in such a manner that the caffeine content is reduced to a percentage q, depending on the percentage p mentioned sub (a), and

(c) returning the decaffeinated extract produced sub (b) to the process stage mentioned sub (a), while adding an amount of water to this extract, equal to the amount adsorbed by the beans in process stage (a) and together with the beans ultimately removed from this process stage.

3. A process according to claim 2, characterized in that the beans are supplied to process stage (a) in the air-dry state.

4. A process according to claim 2 or 3, characterized in that process stage (a) is carried out in accordance with the "droplet-extraction" method ("trickle flow") at a temperature of between about 60° and about 95°C.

**Patentansprüche**

1. Verfahren zum Entcoffeinieren von Rohkaffeebohnen mit Aktivkohle durch Extraktion mit Wasser und Behandlung des wässrigen Extraktes mit Aktivkohle, dadurch gekennzeichnet, dass die Aktivkohle eine spezifische Adsorptionsfähigkeit für Coffein von mindestens 100 g pro kg Kohlenstoff und eine spezifische Selektivität von mindestens 0,200 aufweist und eine positives Verhältnis zwischen einerseits der Konzentration des Bohnenextraktes und andererseits der Anteilsrate von coffeinhaltigen/coffeinfreien Extraktfeststoffen im Adsorbens aufweist, wenn sie sich mit dem Bohnenextrakt im Gleichgewicht befindet, sobei diese spezifische Adsorptionsfähigkeit durch die Grammenge von Coffein angegeben wird, die von 1 kg Aktivkohle adsorbiert wird, wenn sie sich bei 80°C im Gleichgewicht mit einer wässrigen Coffeinlösung befindet, die eine Konzentration von 20 g Coffein pro Liter hat, während die spezifische Selektivität der Aktivkohle als die Anteilsrate von coffeinhaltigen/coffeinfreien Extraktfeststoffen in der Aktivkohle definiert wird, die mit einem ausgeglichenen Kaffeebohnenextrakt bestimmt wird, der sich mit der zugegebenen Aktivkohle bei einer Temperatur von 80°C im Gleichgewicht befindet, wobei dieser ausgeglichene Kaffeebohnenextrakt ein Extrakt ist, der, soweit der Austausch von Feststoffen betroffen ist, sich mit Rohkaffeebohnen im Gleichgewicht befindet, denen nur soviel Wasser zugegeben wurde, das die maximale Menge darstellt, die von ihnen absorbiert wird, wenn sie aufquellen.

2. Verfahren nach Anspruch 1 für einen kontinuierlichen Durchführungsmodus, das unter ausgeglichenen Verfahrensbedingungen die folgenden zusammenwirkenden Verfahrensschritte aufweist:

(a) Vermischung der Rohkaffeebohnen mit einer Wassermenge, die geringer ist, als die gesamte Wasserabsorptionsfähigkeit bei der vorherrschenden Extraktionstemperatur und Befeuchten und Extraktion dieser Rohkaffeebohnen bei einer Temperatur von 60—120°C unter gegenläufigen Bedingungen mit dem unter (c) hergestellten wässrigen Extrakt in einer Weise, dass die Konzentration des endgültigen Extraktes höher ist, als die Gleichgewichtskonzentration der Kaffeebohnen und dass der Coffeingehalt auf einen vorbestimmten Prozentsatz p reduziert wird, der auf der Basis der lufttrockenen Kaffeebohnen berechnet wird, wobei die Kaffeebohnen in maximal aufgequollenem Zustand abgegeben werden,

(b) Behandlung des unter (a) produzierten Endextraktes unter gegenläufigen Bedingungen mit der Aktivkohle, wobei diese gegenläufige Behandlung in einer solchen Weise durchgeführt wird, dass der Coffeingehalt auf einen Prozentsatz q reduziert wird, der von dem unter (a) genannten Prozentsatz p abhängt, und

(c) Rückführung des unter (b) produzierten entcoeffeinierten Extraktes in den unter (a) genannten Verfahrensschritt, während diesem Extrakt eine Wassermenge zugegeben wird, die gleich der Menge ist, die von den Kaffeebohnen im Verfahrensschritt (a) absorbiert und schliesslich zusammen mit den Kaffeebohnen aus dieser Verfahrensstufe entfernt wird.

3. Verfahren nach Anspruch 2, dadurch gekennzeichnet, dass die Rohkaffeebohnen in lufttrockenem Zustand in die Verfahrensstufe (a) eingegeben werden.

4. Verfahren nach einem der Ansprüche 2 oder 3, dadurch gekennzeichnet, dass die Verfahrensstufe (a) entsprechend der "Tröpfchen-Extraktion" ("Tröpfelfluss") bei einer Temperatur zwischen etwa 60°C und etwa 95°C durchgeführt wird.

**Revendications**

1. Un procédé pour décaféiner des grains de café vert par extraction avec de l'eau et par traitement de l'extrait aqueux avec du carbone actif, caractérisé en ce que le carbone actif a une capacité d'adsorption spécifique de la caféine d'au moins 100 g/kg de carbone, une sélectivité spécifique d'au moins 0,200, et présente une corrélation positive entre, d'une part, la concentration de l'extrait de café vert et, d'autre part, le rapport pondéral entre la caféine et les solides d'extrait sans-caféine dans l'adsorbant lorsqu'il est en équilibre avec l'extrait de grains, ladite capacité d'adsorption spécifique étant déterminée par le nombre de grammes de caféine adsorbée par 1 kg de carbone actif lorsque, à 80°C, il est en équilibre avec une solution aqueuse de caféine ayant une concentration de 20 g de caféine par litre, et ladite sélectivité spécifique du carbone actif étant définie comme le rapport pondéral entre la caféine et les solides d'extrait sans-caféine dans le carbone actif, déterminé avec un extrait de grains en équilibre avec le carbone actif chargé à une température de 80°C, ledit extrait de grains verts étant un extrait qui, en ce qui concerne l'échange de solides, est en équilibre avec des grains auxquels on vient d'ajouter juste la quantité d'eau correspondant à la quantité maximale absorbée par eux avec gonflement.

2. Un procédé conforme à la revendication 1 pour un mode continu, caractérisé, dans des conditions d'équilibre opératoire, par les étapes opératoires coopérantes suivantes consistant à:

(a) introduire les grains de café vert avec une teneur en eau inférieure à celle de la capacité totale d'adsorption d'eau à la températrue d'extraction existante, et les soumettre à une température de 60 à 120°C, et dans des conditions à contre-courant, effectuer une humidification et une extraction avec l'extrait aqueux produit dans (c), d'une manière telle que la concentration de l'extrait final soit supérieure à la concentration en équilibre de grains, et la teneur en caféine est réduite à un pourcentage prédéterminé p, calculé sur la base des grains séchés à l'air, les grains étant déchargés dans une condition de gonflement maximal,

(b) traiter l'excès final produit en (a) dans des conditions à contre-courant avec le carbone actif, ledit traitement à contre-courant étant effectué d'une manière telle que la teneur en caféine soit réduite à un pourcentage q, qui est fonction du pourcentage mentionné en (a), et

(c) renvoyer l'extrait décaféiné produit en (b) dans l'étape opératoire mentionnée en (a), tout en ajoutant à cet extrait une quantité d'eau égale à la quantité adsorbée par les grains dans l'étape opératoire (a), et en même temps que les grains sortant finalement de cette étape opératoire.

3. Un procédé selon la revendication 2, caractérisé en ce que les grains sont introduits dans l'étape opératoire (a) à l'état séché à l'air.

4. Un procédé selon la revendication 2 ou 3, caractérisé en ce que l'étape opératoire (a) est effectuée selon le procédé d'"extraction en gouttelettes" ("écoulement filtré") à une température comprise entre environ 60° et environ 95°C.